**Europäisches Patentamt**

**European Patent Office**

**Office européen des brevets**

(19)

(11) Veröffentlichungsnummer : **0 554 290 B1**

(12) **EUROPÄISCHE PATENTSCHRIFT**

(45) Veröffentlichungstag der Patentschrift :
**01.02.95 Patentblatt 95/05**

(51) Int. Cl.$^6$ : **H04B 1/66, H04L 1/00**

(21) Anmeldenummer : **91918111.5**

(22) Anmeldetag : **25.10.91**

(86) Internationale Anmeldenummer :
**PCT/DE91/00832**

(87) Internationale Veröffentlichungsnummer :
**WO 92/08296 14.05.92 Gazette 92/11**

(54) **VERFAHREN ZUM ERKENNEN VON FEHLERN BEI DER ÜBERTRAGUNG VON FREQUENZCODIERTEN DIGITALEN SIGNALEN.**

(30) Priorität : **25.10.90 DE 4034017**

(43) Veröffentlichungstag der Anmeldung :
**11.08.93 Patentblatt 93/32**

(45) Bekanntmachung des Hinweises auf die
Patenterteilung :
**01.02.95 Patentblatt 95/05**

(84) Benannte Vertragsstaaten :
**AT BE CH DE DK ES FR GB GR IT LI LU NL SE**

(56) Entgegenhaltungen :
**EP-A- 0 139 803**
**WO-A-87/02210**
**ICASSP 1990, vol. 2, 6 April 1990, Albuquerque, US, pages 1105-1108; E. Eberlein et al.: "Audio codec for 64 Kbit/sec (ISDN channel) - requirements and results"**
**ICASSP 1980, vol. 2, April 1980, Denver, US, pages 344-347; Bergeron et al.: "A robust adaptive transform coder for 9.6 KB/S speech transmission"**

(73) Patentinhaber :
**FRAUNHOFER-GESELLSCHAFT ZUR FÖRDERUNG DER ANGEWANDTEN FORSCHUNG E.V.**
**Leonrodstrasse 54**
**D-80636 München (DE)**

(72) Erfinder : **HERRE, Jürgen**
**Am Röthelheim**
**D-8520 Erlangen (DE)**
Erfinder : **SEITZER, Dieter**
**Humboldstr. 14**
**D-8520 Erlangen (DE)**

(74) Vertreter : **Münich, Wilhelm, Dr. et al**
**Kanzlei Münich, Steinmann, Schiller**
**Wilhelm-Mayr-Str. 11**
**D-80689 München (DE)**

## Beschreibung

### Technisches Gebiet

Die Erfindung bezieht sich auf ein Verfahren zum Erkennen von Fehlern bzw. wahrnehmbaren Störungen bei der Übertragung von frequenzcodierten digitalen Signalen und insbesondere von Audiosignalen, die blockweise von einem Sender zu einem Empfänger übertragen werden.

### Stand der Technik

Verfahren, bei denen beispielsweise Audiosignale frequenzcodiert übertragen werden, sind allgemein bekannt. Nur beispielhaft sei auf die PCT-Veröffentlichungen WO 88/ 001811 und WO 89/08357 verwiesen. Auf diese Druckschriften wird im übrigen zur Erläuterung aller hier nicht näher erläuterten Begriffe ausdrücklich bezuggenommen.

Die in diesen Druckschriften beschriebenen Verfahren benutzen eine geeignete Abbildungstechnik, wie z.B. Filterbänke, Fast-Fourier-Transformation (FFT), DCT, MDCT etc., um die Signale und insbesondere die Audiosignale bezüglich der Frequenz digital zu codieren.

Ist die Übertragung der Daten fehlerhaft, d.h. sind einzelne oder mehrere aufeinander folgende Frequenzkoeffizienten aufgrund von Störungen Fehler-behaftet, so treten im Empfänger nach der "Rücktransformation" in den "Zeitraum" Störungen auf, die sich im Falle von Audiosignalen beispielsweise durch Blubbern, Glucksen usw. äußern.

Ein zur Fehlerverdeckung bei Videosignalen geeignetes Verfahren wird in der PCT-Veröffentlichung WO 87/022 10 beschrieben. Hier findet die Fehlerkorrektur im Spektralbereich statt, wogegen die Fehlerverkennung im Zeitbereich vorgenommen wird.

### Darstellung der Erfindung

Der Erfindung liegt die Aufgabe zugrunde, ein Verfahren zum Erkennen von Fehlern, d.h. von wahrnehmbaren Störungen bei der Übertragung von frequenzcodierten digitalen Signalen und insbesondere von Audiosignalen, die blockweise von einem Sender zu einem Empfänger übertragen werden, anzugeben, das einfach und dennoch subjektiv relativ störungsfrei arbeitet.

Eine erfindungsgemäße Lösung dieser Aufgabe ist im Patentanspruch 1 angegeben. Weiterbildungen der Erfindung sind Gegenstand der Unteransprüche.

Erfindungsgemäß wird aus den Frequenzkoeffizienten zurückliegender sowie gegebenenfalls zukünftiger Blöcke eine Entscheidungsfunktion gebildet, anhand derer ermittelt wird, ob bei der Übertragung ein Fehler aufgetreten ist. Mit dem Begriff "Fehler" ist gemeint, daß durch Vergleich mit zurückliegenden sowie gegebenenfalls zukünftigen Frequenzkoeffizienten entschieden wird, ob nach der Rücktransformation eine wahrnehmbare, d.h. beispielsweise bei Audiosignalen eine hörbare Störung auftritt. Wenn festgestellt wird, daß ein Frequenzkoeffizient mit einem Fehler behaftet ist, d.h. zu einer wahrnehmbaren Störung führt, wird dieser für die Bewertung nachfolgender Blöcke nicht mehr herangezogen.

Gemäß Anspruch 2 können für die Entscheidungsfunktion auch andere Frequenzkoeffizienten des überprüften Blocks herangezogen werden, die insbesondere die Frequenzkoeffizienten niedrigerer Ordnungsnummer, d.h. die zu niedrigeren Frequenzen als der überprüfte Frequenzkoeffizient gehörenden Frequenzkoeffizienten sein können (Anspruch 3).

Weiterhin ist es gemäß Anspruch 4 bevorzugt, wenn für die Entscheidungsfunktion nur Frequenzkoeffizienten herangezogen werden, die zu zurückliegenden Blöcken gehören. Hierdurch entfällt das vergleichsweise aufwendige Zwischenspeichern der übertragenen Frequenzkoeffizienten im Empfänger.

Gemäß den Ansprüchen 5 und 6 können als Entscheidungsfunktionen Funktionen F(i,k) verwendet werden, die durch Maximalwertbildung, Mittelwertbildung oder andere Linearkombinationen von Koeffizienten benachbarter Blöcke gebildet werden.

Gemäß Anspruch 5 wird ein symmetrisches Frequenzintervall verwendet, das einerseits ein besonders gute Erkennung von Fehlern erlaubt, bei dem aber andererseits auch "ungeprüfte höhere" Frequenzkoeffizienten herangezogen werden.

Das erfindungsgemäße Verfahren erlaubt in jedem Falle das sichere Erkennen von Fehlern, d.h. von wahrnehmbaren Störungen, ohne daß die Übertragung Zusatzinformationen zusätzlich zu der Übertragung von Frequenzkoeffizienten notwendig wäre. Da die Korrektur unter Heranziehung zeitlich und-/oder frequenzmäßig benachbarter transformierter Werte erfolgt, ist das erfindungsgemäße Verfahren anwendbar auf alle Arten von Abbildungstechniken und unabhängig vom spezifischen inneren Aufbau des Übertragungssystems. Es kann damit beispielsweise bei der Erkennung von hörbaren Störungen beispielweise bei der Übertragung von digitalen Rundfunksendungen, bei denen ein "Datenreduktionsverfahren" Anwendung findet, oder aber auch bei der Wiedergabe von Signalen verwendet werden, die als "nichtreduzierte" Frequenzkoeffizienten gespeichert sind.

Vor allem aber erlaubt das erfindungsgemäße Verfahren nicht nur das Erkennen eines Fehlers, sondern auch dessen Korrektur. Hierzu wird der mit einem Fehler behaftete Frequenzkoeffizient durch einen Näherungswert ersetzt, der aus dem als fehlerfrei erkannten und gegebenenfalls den korrigierten Werten der zuvor als fehlerbehaftet erkannten Frequenzkoeffizienten sowie aus den aktuellen noch nicht bewerteten Frequenzkoeffizienten dieses und benachbarter Blöcke gebildet wird (Ansprüche 7 bis 9).

**Beschreibung eines Ausführungsbeispiels**

Die Erfindung wird nachstehend anhand eines Beispiels ohne Beschränkung des allgemeinen Erfindungsgedankens beschrieben:

Wie bereits ausgeführt, werden bei dem erfindungsgemäßen Verfahren die im Empfänger auftretenden empfangenen bzw. blockweise rekonstruierten Werte im Frequenzbereich betrachtet, bevor sie in den Zeitbereich zurücktransformiert werden. Dabei werden die Werte mehrerer zurückliegender und eventuell zukünftiger zu rekonstruierender Blöcke gespeichert; die Werte zukünftig zu rekonstruierender Blöcke stehen dabei durch eine entsprechende Verzögerung der Rekonstruktion zur Verfügung. Die Verarbeitung kann insbesondere durch einen an sich bekannten digitalen Signalprozessor erfolgen, der gegebenenfalls mit Pipelining arbeitet und entsprechende Speicher bzw. Verzögerungseinrichtungen aufweist.

In der folgenden exemplarischen Beschreibung wird mit $x(i,k)$ der i-te Frequenzkoeffizient des k-ten Blockes bezeichnet. Aus den Frequenzkoeffizienten $x(i,k)$ wird eine Entscheidungsfunktion $F(i,k)$

$$F(i,k) = f(x(i - d1..i + d2, k - d3..k + d4)$$

gebildet, anhand derer entschieden wird, ob der Frequenzkoeffizient $x(i,k)$ als fehlerhaft, d.h. zu einer wahrnehmbaren Störung führend, angenommen wird. Dabei wird unter wahrnehmbaren Störung eine Störung verstanden, die im Falle von Videosignalen zu einer sichtbaren Bildstörung oder im Falle von Audiosignalen zu einer hörbaren Tonstörung führt.

Dabei können beispielsweise bei einem Übertragungssystem, das mit einer MDCT-Transformation arbeitet, die Ordnungsnummern $d1 = d2 = 4$, $d3 = 2$ und $d4 = 0$ gewählt werden, d.h. es erfolgt eine Betrachtung von je vier benachbarten Frequenzlinien im aktuellen und den in beiden vorhergehenden Blöcken.

Als Entscheidungsfunktion $F(i,k)$ kann beispielsweise folgende Funktion $F(i,k)$ verwendet werden:

$$F(i,k) = |x(i,k)| > 2,5 * Max(|x(m,n)|)$$

mit $x(i,k)$ bzw. $x(m,n)$ i-ter bzw. m-ter Frequenzkoeffizient des k-ten bzw. n-ten Blocks,
und $i-4 \leq m \leq i+4$ sowie $k-2 \leq n \leq k$.

Selbstverständlich können als Entscheidungsfunktionen auch andere geeignete Funktionen $F(i,k)$ verwendet werden, die beispielsweise durch Mittelwertbildung oder andere Linearkombinationen von Koeffizienten benachbarter Blöcke gebildet werden. Diese Funktionen können symmetrische Frequenzintervalle oder nur in der "Vergangenheit liegende" Frequenzkoeffizienten heranziehen.

Wird mittels der gewählten Entscheidungsfunktion ein Frequenzkoeffizient als Fehler-behaftet erkannt, so wird der Frequenzkoeffizient $x(i,k)$ durch den Wert einer Schätzfunktion

$$G(i,k) = g(x(i - h1..i + h2, k - h3..k + h4)).$$

ersetzt.

Im Falle einer MDCT-Transformation können dabei die Größen wie folgt gewählt werden:

$$h1 = d1$$
$$h2 = d2$$
$$h3 = d3$$
$$h4 = d4$$

Als Schätz- bzw. Näherungsfunktion kann folgende Funktion verwendet werden:

$$G(i,k) = sign(x(i,k)) * Max(|x(m,n)|$$

mit $x(i,k)$ bzw. $x(m,n)$ i-ter bzw. m-ter Frequenzkoeffizient des k-ten bzw. n-ten Blocks,
und $i-4 \leq m \leq i+4$ sowie $k-2 \leq n \leq k$
und $i <> m$ sowie $k <> m$.

Selbstverständlich ist die vorstehend angegebene Schätzfunktion nur ein Beispiel. Je nach Anwendungsfall können auch andere Schätzfunktionen verwendet werden.

Bei dem vorstehend erläuterten Beispiel erfolgt die Fehlererkennung und Fehlerkorrektur ohne Zugriff auf in der Zukunft liegende Frequenzkoeffizienten $x(i,k)$, so daß keine Verzögerung bzw. Speicherung des Ausgangssignals, d.h. der übertragenen Frequenzkoeffizienten erforderlich ist.

Weiterhin wird der korrigierte Wert nicht zur Beurteilung anderer Werte herangezogen und hierzu im Speicher gelöscht.

Vorstehend ist die Erfindung anhand eines Beispiels beschrieben worden; selbstverständlich sind die verschiedensten Modifikationen der Erfindung möglich:

So können zur Analyse, ob ein Wert fehlerhaft ist, Kriterien aus der Analyse der übertragenen Kanaldaten herangezogen werden, wie beispielsweise Quersummen; ferner können Fehlerbedingung aus der Decodierung fehlerkorrigierender Codes usw. abgeleitet werden.

Die Wahl der Parameter $d1..4$, $h1..4$ sowie der exemplarisch angegebenen Entscheidungs- und Schätzfunktion F bzw. G hängt von der verwendeten Abbildungstechnik, von der zulässigen Verzögerungszeit, vom Speicherplatzbedarf und von der Größe der erwarteten Störung ab.

In jedem Falle wird jedoch durch die zweidimensionale Betrachtung der transformierten Werte in Frequenz und Zeit die Verfälschung des Signals durch Fehler auf ein Mindestmaß reduziert. Singulär auftretende, psychoakustisch auffällige Störspitzen werden durch das Verfahren unterdrückt, ein plötzliches Ansteigen des Signalpegels wird jedoch aufgrund der Betrachtung frequenzmäßig benachbarter Werte nicht als Fehler interpretiert.

**Patentansprüche**

1. Verfahren zum Erkennen von Fehlern bzw. wahrnehmbaren Störungen bei der Übertragung von Audiosignalen, bei dem die Audiosignale digitalisiert, frequenztransformiert und codiert werden und die gebildeten Frequenzkoeffizienten blockweise von einem Sender zu einem Empfänger übertragen werden,
dadurch **gekennzeichnet**, daß direkt aus den übertragenen Frequenzkoeffizienten zurückliegender sowie gegebenenfalls zukünftiger Blöcke eine Entscheidungsfunktion gebildet wird, anhand derer das Auftreten eines Fehlers ermittelt wird, und
daß der mit einem Fehler behaftete Frequenzkoeffizient für die Bewertung nachfolgender Blöcke nicht mehr herangezogen wird.

2. Verfahren nach Anspruch 1,
dadurch **gekennzeichnet**, daß für die Entscheidungsfunktion auch andere Frequenzkoeffizienten des überprüften Blocks herangezogen werden.

3. Verfahren nach Anspruch 1 oder 2,
dadurch **gekennzeichnet**, daß für die Entscheidungsfunktion nur Frequenzkoeffizienten herangezogen werden, die zu niedrigeren Frequenzen als der überprüfte Koeffizient gehören.

4. Verfahren nach einem der Ansprüche 1 bis 3,
dadurch **gekennzeichnet**, daß für die Entscheidungsfunktion nur Frequenzkoeffizienten herangezogen werden, die zu zurückliegenden Blöcken gehören.

5. Verfahren nach einem der Ansprüche 1 bis 4,
dadurch **gekennzeichnet**, daß als Entscheidungsfunktion eine Funktion F(i,k) verwendet wird
$$F(i,k) = |x(i,k)| > 2{,}5 * Max(|x(m,n)|)$$
mit x(i,k) bzw. x(m,n) i-ter bzw. m-ter Frequenzkoeffizient des k-ten bzw. n-ten Blocks,
und $i-4 \leqq m \leqq i+4$ sowie $k-2 \leqq n \leqq k$.

6. Verfahren nach einem der Ansprüche 1 bis 4,
dadurch **gekennzeichnet**, daß als Entscheidungsfunktion eine Funktion F(i,k) verwendet wird, die durch Mittelwertbildung oder andere Linearkombinationen von Koeffizienten benachbarter Blöcke gebildet wird.

7. Verfahren nach einem der Ansprüche 1 bis 6,
dadurch **gekennzeichnet**, daß der von der Entscheidungsfunktion als mit einem Fehler behaftet erkannte Frequenzkoeffizient durch einen Näherungswert ersetzt wird, der aus den als Fehlerfrei erkannten sowie den korrigierten Werten der zuvor als Fehler-behaftet erkannten Frequenzkoeffizienten dieses und benachbarter Blöcke gebildet wird.

8. Verfahren nach Anspruch 7,
dadurch **gekennzeichnet**, daß für die Bildung des Nährungswertes nur als Fehler-frei erkannte Frequenzkoeffizienten herangezogen werden.

9. Verfahren nach Anspruch 7 oder 8,
dadurch **gekennzeichnet**, daß als Näherungsfunktion die Funktion G(i,k) verwendet wird,
$$G(i,k) = sign(x(i,k)) * Max(|x(m,n)|)$$
mit x(i,k) bzw. x(m,n) i-ter bzw. m-ter Frequenzkoeffizient des k-ten bzw. n-ten Blocks,
und $i-4 \leqq m \leqq i+4$ sowie $k-2 \leqq n \leqq k$
und $i <> m$ sowie $k <> m$.

**Claims**

1. Method of detecting errors or perceivable trouble in the transmission of audio signals, wherein the audio signals are digitized, transformed in terms of frequency and coded, and wherein the frequency coefficients so formed are transmitted by blocks from a transmitter to a receiver,
**characterized** in that a decision function is derived directly from the transmitted frequency coefficient of past and possibly future blocks, which are then employed to detect the occurrence of an error, and
that the frequency coefficient found to be faulty is no longer referred to for the assessment of succeeding blocks.

2. Method according to Claim 1,
**characterized** in that other frequency coefficients of the checked block, too, are referred to for the decision function.

3. Method according to Claim 1 or 2,
**characterized** in that only those frequency coefficients are referred to for the decision function which appertain to frequencies lower than that of the coefficient under check.

4. Method according to any of Claims 1 to 3,
**characterized** in that only those frequency coefficients are referred to for the decision function which appertain to past blocks.

5. Method according to any of Claims 1 to 4,
**characterized** in that a function F(i,k) is employed as decision function
$$F(i,k) = |x(i,k)| > 2.5 * max(|x(m,n)|)$$
wherein x(i,k) or x(m,n), respectively, represent the i-th or m-th frequency coefficient of the k-th or n-th block, respectively,
and i-4 $\leq$ m $\leq$ i+4 as well as k-2 $\leq$ n $\leq$ k.

6. Method according to any of Claims 1 to 4, **characterized** in that a function F(i,k) is employed as decision function which has been formed by averaging or by other linear combinations of coefficients of adjoining blocks.

7. Method according to any of Claim 1 to 6, **characterized** in that the frequency coefficient found to be faulty by said decision function is substituted by an approximated value which is derived from the values found to be faultless as well as from the corrected values of frequency coefficients previously found to be faulty in this block and adjoining blocks.

8. Method according to Claim 7, **characterized** in that frequency coefficients found to be faultless only are referred to for the formation of said approximated value.

9. Method according to Claim 7 or 8, **characterized** in that the function G(i,k) is employed as approximation function:
   G(i,k) = sign(x(i,k)) $*$ max($|$x(m,n)$|$)
wherein x(i,k) or x(m,n), respectively, represent the i-th or m-th frequency coefficient of the k-th or n-th block, respectively,
and i-4 $\leq$ m $\leq$ i+4 as well as k-2 $\leq$ n $\leq$ k
and i < > m as well as k < > m.

**Revendications**

1. Procédé pour la détection d'erreurs perceptibles lors de la transmission de signaux audio, dans lequel les signaux audio sont numérisés, transformés en fréquence et codés, et dans lequel les coefficients de fréquence ainsi formés sont transmis, par blocs, d'un émetteur à un récepteur,
**caractérisé** en ce qu'une fonction de décision est dérivée directement du coefficient de fréquence transmis des blocs passés et éventuellement futurs, qui sont ensuite utilisés pour la détection de la présence d'un erreur, et
en ce que le coefficient de fréquence trouvé comme dérangé n'est plus utilisé comme référence dans l'évaluation des blocs suivants.

2. Procédé selon la revendication 1, **caractérisé** en ce que des autres coefficients de fréquence du bloc contrôlé sont aussi utilisés comme références pour la fonction de décision.

3. Précédé selon les revendications 1 ou 2, **caractérisé** en ce que seulement ceux coefficients de fréquence sont utilisés comme référence pour la fonction de décision, qui sont affectés aux fréquences plus basses que la fréquence du coefficient contrôlé.

4. Procédé selon une quelconque des revendications 1 à 3, **caractérisé** en ce que seulement ceux coefficients de fréquence sont utilisés comme référence pour la fonction de décision, qui sont affectés à des blocs passés.

5. Procédé selon une quelconque des revendications 1 à 4,
**caractérisé** en ce qu'une fonction F(i,k) est utilisée comme fonction de décision
   F(i,k) = $|$x(i,k)$|$ > 2.5 $*$ max($|$x(m,n)$|$)
dans laquelle x(i,k) ou respectivement x(m,n) représentent le i$^{me}$ ou m$^{me}$ coefficient de fréquence du k$^{me}$ ou respectivement n$^{me}$ bloc,
et i-4 $\leq$ m $\leq$ i+4 ainsi que k-2 $\leq$ n $\leq$ k.

6. Procédé selon une quelconque des revendications 1 à 4,
**caractérisé** en ce qu'une fonction F(i,k) est utilisée comme fonction de décision, qui était formée moyennant une méthode des moyennes ou par toute autre combinaison linéaire des coefficients des blocs voisins.

7. Procédé selon une quelconque des revendications 1 à 6,
**caractérisé** en ce que le coefficient de fréquence trouvé comme dérangé moyennant ladite fonction de décision est substitué par une valeur approximative qui est dérivée des valeurs trouvées d'êtres sans dérangements, ainsi que des valeurs compensées des coefficients de fréquence trouvés, au préalable, comme dérangés, dans ce bloc ou dans des blocs voisins.

8. Procédé selon la revendication 7, **caractérisé** en ce que seulement les coefficients de fréquence trouvés d'être sans dérangements, sont utilisés comme référence pour la formation de ladite valeur approximative.

9. Procédé selon les revendications 7 ou 8, **caractérisé** en ce que la fonction G(i,k) est utilisée comme fonction d'approximation:
   G(ik) = sign(x(i,k)) $*$ max($|$x(m,n)$|$)
dans laquelle x(i,k) ou respectivement x(m,n) représentent le i$^{me}$ ou m$^{me}$ coefficient de fréquence du k$^{me}$ ou respectivement n$^{me}$ bloc,
et i-4 $\leq$ m $\leq$ i+4 ainsi que k-2 $\leq$ n $\leq$ k
et i < > m ainsi que k < > m.